# EUROPEAN PATENT SPECIFICATION

(11) **EP 2 499 923 B1**
(45) Date of publication and mention of the grant of the patent: **14.05.2014**
(21) Application number: 10828404.3
(22) Date of filing: 09.11.2010
(51) Int. Cl.: A23L 1/238, A23L 1/237

(54) **LIQUID SEASONING HAVING IMPROVED FLAVOR**
FLÜSSIGES WÜRZMITTEL MIT VERBESSERTEM AROMA
ASSAISONNEMENT LIQUIDE AYANT UN ARÔME AMÉLIORÉ

(30) Priority: 09.11.2009 JP 2009256241
(43) Date of publication of application: 19.09.2012
(73) Proprietor: Kikkoman Corporation, Chiba 278-8601 (JP)
(72) Inventor: TSUCHIYA Katsunori, Noda-shi ,Chiba 278-8601 (JP); UCHIDA Riichiro, Noda-shi ,Chiba 278-8601 (JP); TODA Yasuka, Noda-shi Chiba 278-8601 (JP)
(74) Representative: Kramer - Barske - Schmidtchen
(86) International application number: PCT/JP2010/069964
(87) International publication number: WO 2011/055846

(56) References cited:
- WO-A1-88/09131
- JP-A- 2006 141 223
- JP-A- 2006 141 226
- US-A- 5 370 882
- US-B1- 6 787 169

## Description

### TECHNICAL FIELD

The present invention relates to a soy sauce which is excellent in salty taste and tastiness regardless of its low common salt content.

### BACKGROUND OF THE INVENTION

In recent years, it is said that intake of excess common salt exerts bad influences on kidney trouble, heart trouble or hypertension. Thus, reduction of common salt in liquid seasoning has advanced due to increase in the health-conscious of consumers. Certainly, although a liquid seasoning wherein common salt is reduced is excellent in limiting intake of common salt, on the other hand, its popularization is not smooth since the reduction of common salt causes unsatisfactory feeling on taste.

Potassium chloride, ammonium chloride and the like are generally known as salty taste substitutes (substances which show salty taste by themselves) (e.g., see Patent Reference 1). These salty taste substitutes are difficult to handle because of the possession of bitterness and a peculiar unpleasant taste (to be referred to as foul taste hereinafter) in addition to the salty taste. In general, these are used in combination with a foul taste inhibitor in order to cover the foul taste. As the techniques for inhibiting foul taste of potassium chloride, for example, methods to add a flavor substance (e.g., see Patent Reference 2), poly-γ-glutamic acid (e.g., see Patent Reference 3), an acidic amino acid (e.g., see Patent Reference 4), an organic acid (e.g., see Patent Reference 5), a gluconate and a lactic acid mineral (e.g., see Patent Reference 6) have been proposed. However, since potassium chloride is weak in salty taste intensity in comparison with sodium chloride, there is a problem in that its taste quality is changed when potassium chloride and a foul taste inhibitor are added in such amounts that the salty taste equivalent to sodium chloride can be reproduced. On the other hand, although ammonium chloride is excellent from the viewpoint that its salty taste is stronger than potassium chloride, it has a complex foul taste which is different from the taste of potassium chloride and it is difficult to add at a high concentration. Therefore, great concern has been directed toward the development of a technique for inhibiting such a foul taste peculiar to ammonium chloride. Additionally, as salty taste reinforcing substances (substances which do not have salty taste by themselves but have the effect to stress the salty taste of common salt), a basic amino acid such as arginine (e.g., see Patent Reference 7), hydrolyzates of protein or nucleic acid (e.g., see Patent References 8 and 9), a peptide (e.g., see Patent Reference 10), capsaicin (e.g., see Patent Reference 11) and a sweetener such as sorbitol, trehalose (e.g., see Patent References 12 and 13) are known. However, sufficient salty taste reinforcing effect can hardly be obtained when a salty taste reinforcing substance is used alone. Thus, although its combination use with a salty taste substitute has also been attempted, since it is necessary to also use a foul taste inhibitor of the salty taste substitute as described in the above, there is a problem in that harmony of taste can hardly be effected and the taste quality is largely changed.

### RELATED ART REFERENCES

### PATENT REFERENCES

Patent Reference 1: JP-A-2006-141223
Patent Reference 2: JP-A-11-187841
Patent Reference 3: JP-A-2009-136266
Patent Reference 4: JP-A-2006-149205
Patent Reference 5: JP-A-2006-141223
Patent Reference 6: JP-A-2008-289426
Patent Reference 7: JP-A-2002-345430
Patent Reference 8: WO01/039613
Patent Reference 9: JP-A-2009-148216
Patent Reference 10: JP-T-2009-512425
Patent Reference 11: JP-A-2001-245627
Patent Reference 12: JP-A-2008-99624
Patent Reference 13: JP-A-10-66540

### NON-PATENT REFERENCES

Non-patent Reference 1: "Zokyo Shoyu no Kagaku to Gijutsu (Science and Technology of Soy Sauce, Supplement)" edited by Tatsurokuro Tochikura, (The Brewing Society of Japan, 1994, p. 406)

US 5,370,882 A discloses a food which has a sodium chloride content of at least about 0.20 % by weight and which contains a food-acceptable ammonium salt encapsulated in a food-acceptable carrier agent in an amount to enhance salt taste of the food.

WO 88/09131 A1 discloses a salt substitute which comprises (a) a preponderant amount of ammonium chloride, (b) a lesser effective amount of one or more pH adjusters to suppress the bitter taste of the ammonium chloride and prevent the formation of ammonia gas when the salt substitute is used, and (c) a lesser effective amount of sugar to reduce sourness when the salt substitute is used.

US 6,787,169 B1 discloses a physiological food salt product including an alkaline earth metal component, the product comprising at least one hydrate form having the general formula MNHaCl₃ × XH₂O, wherein M represents Mg or Mg and Ca and X represents the number of molecules of water of crystallization and is in the range of 4 to 6, and at least one of sodium chloride and potassium chloride.

### SUMMARY OF THE INVENTION

### PROBLEMS THAT THE INVENTION IS TO SOLVE

The problem that the present invention is to solve is to provide a soy sauce which is excellent in salty taste and tastiness regardless of its low common salt content.

### MEANS FOR SOLVING THE PROBLEMS

With the aim of solving the above-mentioned problem, the inventors of the present invention have carried out intensive studies and found as a result that a soy sauce which is less in peculiar foul taste and has excellent salty taste and tastiness can be obtained when the common salt content is lowered to a certain level or less and when its pH is within a certain range with regard to a soy sauce containing a specified concentration of ammonium ion, to accomplish the present invention.

Namely, the present invention provides:
1. A soy sauce, which comprises from 0.5% to 7% (w/v) of common salt and from 0.2% to 4 % (w/v) of ammonium ion and has a pH value of from 3.2 to 5.4;
2. The soy sauce according to the above 1, wherein the pH is from 3.6 to 5.4.

### EFECT OF THE INVENTION

According to the present invention, a soy sauce which is excellent in salty taste and tastiness regardless of its low common salt content can be provided.

### MODE FOR CARRYING OUT THE INVENTION

The following describes the present invention in detail.

The soy sauce is a substance which is used for the purpose of carrying out flavoring by hydrolyzing a high protein content material and collecting the liquid part. For example, there may be mentioned a fermented soy sauce prepared by heat-treating a plant material such as soybean, wheat, allowing a *koji* mold to grow thereon; and then carrying out fermentation and aging in a salt solution, a chemical soy sauce or hydrolyzed vegetable protein (HVP) prepared by degrading a plant material with an acid or enzymes, a fish sauce prepared by fermenting a fishery product, a meat sauce prepared by fermenting a meat, a hydrolyzed animal protein (HAP)prepared by degrading a fiery product or meat with an enzymes or acid. Among these, a fermented soy sauce is preferable, and the soy sauce described for example in the soy sauce quality indication standard (Ministry of Agriculture, Forestry and fisheries bulletin No. 1665, revised bulletin No. 1704) is particularly preferable. The soy sauce is divided into various species depending on the material ratio of soybean and wheat, material treating method and production method such as common salt concentration, and for example, there are *Koikuchi, Usukuchi, Tamari, Shiro, Saishikomi*. According to the present invention, the soy sauce is used as a one species alone or in combination of two or more species.

The content of common salt in the soy sauce of the present invention is from 0.5% to 7% (w/v), and is more preferably from 0.5 % to 6% (w/v), further particularly preferably from 0.5% to 5% (w/v). Although determination method of the common salt concentration is not particularly limited, for example, there are atomic absorption analysis, a Mohr's method.

Regarding adjustment of the common salt content of the soy sauce of the present invention, for example, the above-mentioned soy sauce is prepared by subjecting it to desalting and dilution or by subjecting it in advance to fermentation, aging and degradation under a low common salt condition. Although adjusting method of the common salt content of the soy sauce is not particularly limited, examples thereof include the electrophoresis method and selective dialysis membrane method described in Non-patent Reference 1, a concentrated preparation method, a low salt solution preparation method and the methods can be used as a one species alone or in combination of two or more species. In addition, the soy sauce of the present invention may be used for preparing a soy sauce-containing seasoning. For example, examples thereof include dressings, soups such as *Mentsuyu, Nabetsuyu, Dashitsuyu* and the like, sauces for grilled meat, grilled chicken, fermented soybeans.

Ammonium ion concentration in the soy sauce of the present invention is from 0.2% to 4.0% (w/v), preferably from 0.3% to 2.0% (w/v), which can be realized for example by a method for adding various ammonium salts, improvement of brewage (e.g., formation by degradation of glutamine, fermentation production by a microorganism), alone or in combination of two or more methods. When an ammonium salt is added to the soy sauce, it may be carried out by any production process or may be added to finished products. The various ammonium salts to be added are not particularly limited as long as they can be used as foods. For example, ammonium salts such as ammonium chloride, diammonium hydrogen phosphate, ammonium dihydrogen phosphate are used and ammonium chloride is used particularly preferably. Although the determination method of ammonium ion concentration is not particularly limited, examples thereof include a method in which it is separated by a high performance liquid chromatography and detected by the ninhydrin method.

The pH in the soy sauce of the present invention is from 3.2 to 5.4, preferably from 3.2 to 5.2, further from 3.6 to 5.2. When adjustment of pH is necessary, the acidity agents, pH adjusting agents are not particularly limited as long as they can be used in food. When pH is lowered, hydrochloric acid, lactic acid, phosphoric acid, tartaric acid, citric acid, malic acid can be used for example. Additionally, when pH is increased, sodium hydroxide, potassium carbonate, sodium carbonate, sodium bicarbonate can be used for example. Although measurement of pH is not particularly limited, for example, a glass electrode method are used.

The soy sauce as the product of the present invention can be used directly as a seasoning or made into a pasty seasoning by drying and concentrating it. Furthermore, it can be formed into a powdery, fine granule, granular, plate shapes by a general pharmaceutical preparation method. Additionally, it can be drank as a soup by adding water.

Although the following illustratively describes the present invention in conformity with Examples, the technical scope of the present invention is not limited by the descriptions.

### EXAMPLE 1

### [Production of the soy sauce of the invention]

[See a patent document of this company (JP-A-2006-087328)]

Approximately equivalent amounts of steamed-denatured defatted soybean and roast-pulverized wheat were mixed. A mold starter was inoculated thereon and subjected to 42 hours of koji making with aeration to obtain soy sauce koji followed by storage in a high concentration sodium chloride solution; subjected to fermentation and aging by carrying out 150 days of usual unrefined soy management at 25°C to 30°C with optional stirring followed by pressure-filtration to obtain a raw soy sauce containing about 18% (w/v) of sodium chloride and 1.7% (w/v) of total nitrogen.

This raw soy sauce was subjected to 3 hours of firing at 80°C and then to clarifying filtration. By carrying out a demineralization treatment using an electrodialyser, a demineralized soy sauce containing 0.5% (w/v) of sodium chloride, about 1.6% (w/v) of total nitrogen and 0.03% (w/v) of ammonium ion, pH 5.0, was obtained.

By adding 1.5% (w/v), 3.5% (w/v), 4.5% (w/v), 5.5% (w/v), 6.5% (w/v), 7.5% (w/v), 11.5% (w/v) or 15.5% (w/v) of sodium chloride to the demineralized soy sauce and dissolving therein, a soy sauce having a common salt concentration of 2% (w/v), 4% (w/v), 5% (w/v), 6% (w/v), 7% (w/v), 8% (w/v), 12% (w/v) or 16% (w/v) was obtained (including a sample of no sodium chloride addition, to be referred to as base soy sauce hereinafter).

By adding 0.5% (w/v) of ammonium chloride on the ammonium ion basis to each of the base soy sauces having respective common salt concentrations and stirring, ammonium chloride addition seasonings (test samples 1 to 9) were obtained. (Reference: ammonium chloride MW = 53.5)

In the same manner, by adding 0.1% (w/v), 0.2% (w/v), 0.3% (w/v), 0.4% (w/v), 1% (w/v), 2% (w/v), 3% (w/v), 4% (w/v), 5% (w/v) or 7% (w/v) of ammonium chloride on the ammonium ion basis to the base soy sauce having a common salt concentration of 4% (w/v) and stirring, ammonium chloride addition seasonings (test samples 10 to 19) were obtained.

Also, by adding 0.5% (w/v) of ammonium dihydrogen phosphate on the ammonium ion basis to the base soy sauce having a common salt concentration of 4% (w/v), an ammonium salt addition seasoning (test sample 31) was obtained. (Reference: ammonium dihydrogen phosphate MW = 115.03)

In the same manner, using an ammonium chloride addition sample (test sample 3, pH = 5.0) prepared by adding 0.5% (w/v) of ammonium chloride on the ammonium ion basis to the base soy sauce having a common salt concentration of 4% (w/v), its pH was adjusted to 3.6 to 7.0 with hydrochloric acid or sodium hydroxide to prepare pH-adjusted ammonium chloride addition seasonings (test samples 20 to 30).

### [Assay methods of components in soy sauce]

The common salt concentration was calculated by measuring sodium concentration by an atomic absorption photometer AA6300 (manufactured by Shimadzu Corp.) and converting it into common salt concentration. The total nitrogen quantity was calculated by the Kjeldahl method. The ammonium ion concentration was calculated by measuring as ammonium concentration using an amino acid analyzer L-8500 (manufactured by Hitachi, Ltd.) and converting it. The pH was measured using a pH meter HM-25R (manufactured by Toa DKK).

### EXAMPLE 2

### [Effect of ammonium ion at different common salt concentrations]

Ammonium chloride addition samples were prepared by adding 0.5% (w/v) of ammonium chloride on the ammonium ion basis to the base soy sauces having different common salt concentrations. A sensory evaluation was carried out by 7 panelists on the salty taste, soy sauce likeness, foul taste and liking based on the pair comparison method to obtain the results of Table 1.

**[Table 1]**

| Sample name | Base Soy sauce | Ammonium ion concentration % (w/v) | Panelists who evaluated that salty taste became strong in comparison with base soy sauce | Panelists who evaluated that soy sauce likeness became strong in comparison with base soy sauce | Panelists who evaluated that foul taste became strong in comparison with base soy sauce | Panelists who evaluated as preferable in comparison with base soy sauce |
|---|---|---|---|---|---|---|
| Test sample 1 (inventive product) | Salt concentration 0.5% | 0.5 | 5 | 5 | 0 | 5 |
| Test sample 2 (inventive product) | Salt concentration 2% | 0.5 | 6 | 6 | 0 | 6 |
| Test sample 3 (inventive product) | Salt concentration 4% | 0.5 | 7 | 7 | 0 | 7 |
| Test sample 4 (inventive product) | Salt concentration 5% | 0.5 | 7 | 7 | 0 | 7 |
| Test sample 5 (inventive product) | Salt concentration 6% | 0.5 | 7 | 6 | 1 | 6 |
| Test sample 6 (inventive product) | Salt concentrat ion 7% | 0.5 | 6 | 5 | I | 5 |
| Test samples 7 | Salt concentration 8% | 0.5 | 4 | 4 | 4 | 3 |
| Test sample 8 | Salt concentration 12% | 0.5 | 2 | 0 | 4 | 2 |
| Test sample 9 | Salt concentration 16% | 0.5 | 1 | 1 | 6 | 1 |

It was evaluated by 4 or more of the 7 panelists that the salty taste became strong when the common salt concentration became 8% (w/v) or less. The soy sauce likeness was not judged strong by 12% (w/v) or more. Regarding the foul taste, although it was evaluated that it becomes strong at 8% (w/v) or more, specifically, it was an evaluation such as acidic taste or stimulative taste becomes strong, not salty taste but briny taste becomes strong. The liking was not evaluated as preferable when the concentration became 8% (w/v) or more.

Based on the above, it was shown by the evaluation of test samples 1 to 6 that these become seasonings having improved salty taste and tastiness by the addition of ammonium ion when the common salt concentration becomes 7% (w/v) or less.

### EXAMPLE 3

### [Effect of different ammonium ion concentrations]

Ammonium chloride addition samples (test samples 3 and 10 to 19) were prepared by adding from 0.1 % (w/v) to 7% (w/v) of ammonium chloride on the ammonium ion basis to the base soy sauces having a common salt concentration of 4% (w/v), and a sensory evaluation was carried out by 7 panelists on the salty taste, soy sauce likeness, foul taste and liking based on the pair comparison method to obtain the results of Table 2.

**[Table 2]**

| Sample name | Base soy sauce | Ammonium ion concentrat ion % (w/v) | Panelists who evaluated that salty taste became strong in comparison with base soy sauce | Panelists who evaluated that soy sauce likeness became strong in comparison with base soy sauce | Panelists who evaluated that foul taste became strong in comparison with base soy sauce | Panelists who evaluated as preferable in comparison with base soy sauce |
|---|---|---|---|---|---|---|
| Test sample 10 | Salt concentration 4% | 0.1 | 3 | 3 | 0 | 3 |
| Test sample 11 (inventive product) | | 0.2 | 4 | 5 | 0 | 5 |
| Test sample 12 (inventive product) | | 0.3 | 6 | 6 | 1 | 6 |
| Test sample 13 (inventive product) | | 0.4 | 7 | 7 | 0 | 7 |
| Test sample 3 (inventive product) | | 0.5 | 7 | 7 | 0 | 6 |
| Test sample 14 (inventive product) | | 1 | 7 | 6 | 1 | 6 |
| Test samples 15 (inventive product) | | 2 | 7 | 7 | 1 | 7 |
| Test sample 16 (inventive product) | | 3 | 7 | 5 | 2 | 5 |
| Test sample 17 (inventive product) | | 4 | 7 | 4 | 3 | 4 |
| Test sample 18 | | 5 | 7 | 3 | 6 | 1 |
| Test sample 19 | | 7 | 7 | 2 | 7 | 0 |

It was evaluated by 4 of the 7 panelists that the salty taste became strong when the ammonium ion concentration became 0.2% (w/v) or more. It was evaluated that the soy sauce likeness became strong at an ammonium ion concentration of from 0.2% (w/v) to 4% (w/v). Regarding the foul taste, although it was judged by 6 or more of the 7 panelists that it became strong at 5% or more, there are many comments that acidic taste or stimulative taste becomes strong and that salty taste, briny taste and stimulative taste cannot be distinguished. The liking was not judged as preferable when the concentration became 5% (w/v) or more.

### EXAMPLE 4

### [Effect of different pH values]

Using an ammonium chloride addition sample (test sample 3, pH = 5.0) prepared by adding 0.5% (w/v) of ammonium chloride on the ammonium ion basis to the base soy sauces having a common salt concentration of 4% (w/v), samples (test samples 20 to 30) were prepared by adjusting its pH to 3.6 to 7.0 with hydrochloric acid or sodium hydroxide. A sensory evaluation was carried out by 7 panelists on the intensity of unacceptable foul taste when the test sample 3 was used as a comparative control, based on the pair comparison method to obtain the results of Table 3.

**[Table 3]**

| Sample name | Base soy sauce | Ammonium ion concentration % (w/v) | pH | Panelists who evaluated that foul taste became unacceptably strong in comparison with test sample 3 |
|---|---|---|---|---|
| Test sample 20 (inventive product) | Salt concentration 4% | 0.5 | 3.6 | 0 |
| Test sample 21 (inventive product) | | 0.5 | 4 | 0 |
| Test sample 22 (inventive product) | | 0.5 | 4.2 | 0 |
| Test sample 23 (inventive product) | | 0.5 | 4.4 | 0 |
| Test sample 24 (inventive product) | | 0.5 | 4.6 | 0 |
| Test sample 25 (inventive product) | | 0.5 | 4.8 | 0 |
| Test sample 3 (inventive product) | | 0.5 | 5 | 0 |
| Test sample 26 (inventive product) | | 0.5 | 5.2 | 2 |
| Test sample 27 (inventive product) | | 0.5 | 5.4 | 3 |
| Test sample 28 | | 0.5 | 5.6 | 5 |
| Test sample 29 | | 0.5 | 6 | 7 |
| Test sample 30 | | 0.5 | 7 | 7 |

In comparison with the test sample 3, it was evaluated that the foul taste became considerably strong and unacceptable when the pH approaches neutral by exceeding 5.6. Additionally, it became acceptable at a pH of 5.4 or less so that the strength of foul taste became insensible as the pH is lowered.

### EXAMPLE 5

### [Effect of different ammonium salts]

A sample (test sample 31) was prepared by adding 0.5% (w/v) of ammonium dihydrogen phosphate on the ammonium ion basis to the base soy sauces having a common salt concentration of 4% (w/v). A sensory evaluation was carried out by 7 panelists on the salty taste, soy sauce likeness, foul taste and liking, based on the pair comparison method to obtain the results of Table 4.

**[Table 4]**

| Sample name | Base soy sauce | Kind of ammonium salt | Ammonium ion concentration % (w/v) | Panelists who evaluated that salty taste is strong in comparison with base soy sauce | panelists who evaluated that soy sauce likeness became strong in comparison with base soy sauce | Panelists who evaluated that foul taste became strong in comparison with base soy sauce | Panelists who evaluated as preferable in comparison with base soy sauce |
|---|---|---|---|---|---|---|---|
| Test sample 31 (inventive product) | Salt concen -tration 4% | Ammonium dihydrogen phosphate | 0.5 | 6 | 6 | 1 | 6 |

Also on the test sample 31, it was evaluated by 6 of the 7 panelists that its salty taste and soy sauce likeness became strong. Therefore, the effect of improving salty taste and general taste was also shown by ammonium dihydrogen phosphate.

### EXAMPLE 6

### [Effect of commercial item]

Using Kenyo Soy Sauce (item packaging type, selling agent: Naris Wings B&H Co., Ltd.) having a salinity of 1.8% which is 1/8 by ratio of usual *Koikuchi* soy sauce (cf. Standard Tables of Food Composition in Japan, Fifth Revised and Enlarged Edition), a sample (test sample 32) was prepared by adding 0.5% (w/v) in the final concentration of ammonium chloride thereto on the ammonium ion basis and adjusting its pH to 5.0 with hydrochloric acid (analyses were carried out in the same manner as in EXAMPLE 1). A sensory evaluation was carried out by 7 panelists on the salty taste, soy sauce likeness, foul taste and liking, based on the pair comparison method to obtain the results of Table 5.

**[Table 5]**

| Sample name | Commercial item | Ammonium ion concentration % (w/v) | Panelists who evaluated that salty taste is strong in comparison with commercial item | Panelists who evaluated that soy sauce likeness became strong in comparison with commercial item | Panelists who evaluated that foul taste became strong in comparison with commercial item | Panelists who evaluated as preferable in comparison with commercial item |
|---|---|---|---|---|---|---|
| Test sample 32 (inventive product) | Soy sauce style seasoning (Kenyo Soy Sauce) | 0.5 | 7 | 7 | 0 | 7 |

It was evaluated by all of the panelists that the salty taste and soy sauce likeness were improved, and the liking was also good.

### EXAMPLE 7

### [Effect on cooked food]

On a frying pan, 4 ml of Canola Oil (manufactured by The Nissin Oillio Group, Ltd.) was spread and 200 g of pork loin was fried. By roasting after treating with 10 ml of the base soy sauce of 4% in common salt concentration or of the test sample 3, 7 panelists were allowed to eat it. Among the 7 panelists, 6 panelists answered that the test sample 3 was superior in salty taste than that of the base soy sauce and 5 panelists answered that the test sample 3 was superior in soy sauce likeness than that of the base soy sauce. On the other hand, only 2 answered that the test sample 3 was strong in foul taste than that of the control sample 1. There was a comment from the cooking person in charge that a foul smell is not generated by heating and an aptitude for seasoning is satisfactory. Accordingly, it was able to confirm excellent effect of the inventive product also in the case of cooked food.

### INDUSTRIAL APPLICABILITY

The common salt-reduced soy sauce of the present invention has a sufficient salty taste regardless of the low sodium concentration and also is finished to a well-balanced tastiness without having a sense of incongruity like the case of general seasonings, so that it can provide a high satisfactory feeling at the time of meals. Accordingly, this is broadly used in the cooking and production of low-salt consciousness food and drink.

While the present invention has been described in detail and with reference to specific embodiments thereof, it will be apparent to one skilled in the art that various changes and modifications can be made therein without departing from the scope of the present invention.

## Claims

1. A soy sauce, which comprises from 0.5 % to 7 % (w/v) of common salt and from 0.2 % to 4 % (w/v) of ammonium ion and has a pH value of from 3.2 to 5.4.

2. The soy sauce according to claim 1, wherein the pH is from 3.6 to 5.4.

## Patentansprüche

1. Sojasauce, die 0,5 % bis 7 % (Gew./Vol.) Kochsalz und 0,2 % bis 4 % (Gew.Nol.) Ammoniumionen umfasst und einen pH-Wert von 3,2 bis 5,4 aufweist.

2. Sojasauce nach Anspruch 1, bei welcher der pH-Wert 3,6 bis 5,4 beträgt.

## Revendications

1. Sauce de soja, qui comprend de 0,5 % à 7 % (p/v) de sel ordinaire et de 0,2 % à 4 % (p/v) d'ion ammonium et a une valeur de pH de 3,2 à 5,4.

2. Sauce de soja selon la revendication 1, dont le pH est de 3,6 à 5,4.
